Europäisches Patentamt

European Patent Office

Office européen des brevets

(11) Publication number: **0 167 397**
**B1**

(12) **EUROPEAN PATENT SPECIFICATION**

(45) Date of publication of patent specification: **12.10.88**

(51) Int. Cl.⁴: **F 16 H 39/16**

(21) Application number: **85304765.2**

(22) Date of filing: **04.07.85**

(54) Gearbox and rotary mineral cutting head.

(30) Priority: **05.07.84 GB 8417167**

(43) Date of publication of application:
**08.01.86 Bulletin 86/02**

(45) Publication of the grant of the patent:
**12.10.88 Bulletin 88/41**

(84) Designated Contracting States:
**AT BE DE FR GB**

(56) References cited:
GB-A- 780 729
GB-A-1 045 621
GB-A-1 110 763
GB-A-1 144 340
GB-A-1 207 817
GB-A-2 015 625
GB-A-2 089 869
SU-A- 481 698
US-A-3 799 615
US-A-4 049 318
US-A-4 212 497

HUGO KLEIN "Die Planetenrad-
Umlaufrädergetriebe", 1962, CARL HANSER
VERLAG, München

(73) Proprietor: **MINNOVATION LIMITED**
**Mulberry House Chevet Lane**
**Sandal Wakefield WF2 6HS (GB)**

(72) Inventor: **Parrott, George Albert**
**Mulberry House Chevet Lane**
**Sandal Wakefield WF2 6HS (GB)**

(74) Representative: **Long, Edward Anthony et al**
**Hulse & Co. Cavendish Buildings West Street**
**Sheffield S1 1ZZ (GB)**

Courier Press, Leamington Spa, England.

## Description

This invention relates to a gearbox for rotary cutting head of a mining machinary.

Various proposals exist for the discharge of water from a rotary, mineral cutting head. Such discharge may, at lower pressures, be for purposes such as dust suppression, and at higher pressures, be for water-jet cutting, or water-jet assisted cutting. With regard to the prior art, reference may be made to US—A—3799615 (Taylor), US—A—4049318 (Fruin) and US—A—4212497 (Borowski). Examples of other prior art and in particular phasing arrangements to ensure that water is used efficiently i.e., by being discharged only from nozzles in the cut are disclosed in SU—A—481698, GB—A—2089869, GB—A—1144340, GB—A—1207817, GB—A—1110763 and GB—A—2015625.

Taylor teaches water pressure intensification within a rotary cutting head (in contrast to intensification at a remotely located pump with the high pressure water piped to the head) and the phased emission of high pressure water. Fruin teaches water pressure intensification by means of a multi-cylinder, radial pump also located in the rotary cutting head, with a phased water emission over the sector of the head within the cut. By being located in the head, such pump would require regular replacement, as the typical service life of such a head is conventionally no more than a few months, while furthermore the Fruin bearing ring is exposed to contamination by debris, rock, coal dust etc., and furthermore is not lubricated. Borowski follows what may be regarded as conventional practice in having the cutting head and pump as separate units whereby servicing, replacement or failure of one unit does not affect the other and teaches in fact no more than a phasing arrangement, to ensure that water is, only supplied to, and discharged from nozzles in the cut, with high pressure water supplied by a high pressure pump located at a remote distance from discharge nozzles on the head, with the high pressure water fed invariably by lengthy, expensive, armoured pipework (for protection of personnel in the vicinity should pipe or pipe joint failure occur), and with inevitable pressure losses between the pump and the discharge nozzles.

Document GB—A—1045621 shows a pump unit formed of a series of radially disposed pistons in cylindrical holes in the shaft and connected with a motor having the same configuration to form a variable speed transmission device.

According to the present invention there is provided a gearbox for a rotary cutting head of mining machinery comprising

a casing;

speed reduction gearing contained in the casing;

at least a portion of a drive shaft also contained in the casing, the drive shaft having an axis of rotation; and

first and second bearings spaced apart along the axis; characterised in that

at least one radially extending cylinder having a closed inner end and an open, outer end is provided in the portion of drive shaft contained in the casing.

a reciprocable piston is at least partially housed in a cylinder with a fluid seal between the external periphery of the piston and the internal periphery of its cylinder;

a variable volume, pressure-generating chamber is defined between a radially inner end of a piston and the closed, inner end of its cylinder;

a ring surrounds the drive shaft and an inner profile is provided on the ring;

a radially outer end of the piston is in contact, at least in a pumping mode, with the inner profile, such that upon rotation of the drive shaft, variations in radial distance of the inner profile from the drive shaft axis of rotation causes reciprocation of the piston, and a consequent pumping effect;

at least one fluid transfer port communicating with the pressure-generating chamber(s); and with the first and second bearings additionally absorbing loading from the piston and the ring;

valve means to control fluid admission to, and delivery from, each of the pressure-generating chambers.

Thus, the invention provides an integrated gearbox and hydraulic pump and by pre-charging the pressure chambers with fluid e.g. water, at relatively low pressure e.g. 100 to 200 psi, rotation of the drive shaft by a power source (e.g. an electric motor, with or without an interposed transmission which may if required effect speed reduction), displaces the or each piston radially inwardly to reduce the volume of its pressure chamber, thereby increasing the pressure of fluid in that chamber to the desired level e.g. determined by a flow restrictor or orifice, which may be 2,000 to 30,000 psi or even higher, but most significantly provides a water pressure intensifying pumping means inside the gearbox, and furthermore (a), give the first and second bearings a third function i.e., absorbing loadings from the pumping means, (the first function being absorbing the drive torque applied to the drive shaft, and the second function being, in use, absorbing the cutting forces applied by the mineral to the cutting head, these two functions being known e.g., from Borowski); and (b) give the drive shaft the second function of housing the reciprocable pistons, (beyond its primary function of driving the rotary cutting head, when the latter has been mounted on the gearbox). It will be appreciated that the low pressure charging, apart from requiring only low pressure seals in various ancillary components, maintains the outer ends of the piston(s) in permanent contact with the inner profile of the ring.

Conveniently, the gearbox is of the epicyclic kind, comprising a sun gear rotatable about the drive shaft axis and in drivable engagement with a plurality of planet gears carried by a portion of the drive shaft serving as a carrier, with the planet gears rotatable about axes parallel to the sun gear axis and in mesh with a stationary annulus.

In a first embodiment, the inner profile of the ring may be circular, with the ring located eccentrically with respect to the axis of rotation of the drive shaft, so that one revolution of the carrier produces one delivery stroke of the or each piston. Preferably, the ring is in the form of a bearing ring, with the inner profile provided by an inner, annular face of an inner race part, or a liner of that part, of the bearing ring, the inner race part being separated from an outer race part by a plurality of rollers, preferably double rollers, and the outer race part being located stationarily with respect to the carrier.

Thus, from a bottom dead centre (b.d.c.) position where the volume of the or each generating chamber is at a minimum, rotation of the drive shaft commences what is in fact an induction stroke, with the eccentricity of the bearing ring being arranged to allow the piston(s) to slide radially outwards from its cylinder under the effect the pressure of the pre-charging fluid. Conveniently, the pressure chamber is at its maximum volume at a top dead centre (t.d.c.) position, at which point the pressure chamber has been fully charged, and beyond which point diminution of the volume of the pressure chamber commences, due to the eccentricity of the bearing ring, until the b.d.c. position is reached, when the fluid in the pressure chamber has been discharged.

In a second embodiment, the ring is located concentrically with respect to the axis of rotation of the drive shaft, with the inner profile of the ring being lobed, to constitute a cam track and again being located stationarily with respect to the drive shaft, this arrangement producing multiple delivery strokes of the or each piston per revolution of the drive shaft. To reduce or eliminate friction between the or each piston and the lobed ring, the outer end of the or each piston is preferably provided with a roller follower arrangement.

With either the first or second embodiment, it is preferred to provide a plurality of cylinders and pistons e.g. two located 180° apart, three located 120° apart, four located 90° apart etc. Furthermore, increased output capacity from the or each piston can be achieved by providing banks of pistons, axially spaced from one another e.g. an eight piston pump may have a first bank of four pistons radially spaced 90° apart, which first bank is axially spaced from a second bank of four similar pistons. Conveniently, the gearbox casing, in respect of the first embodiment, also locates the outer race of the bearing ring, and in respect of the second embodiment also locates the lobed ring.

Conveniently, the or each fluid transfer port serves for both the conveying of low pressure fluid to its associated pressure chamber, and the delivery of high pressure fluid from its associated pressure chamber, the valve means effecting suitable control. The or each fluid transfer port conveniently extends axially along the drive shaft and then terminates at a radial connection port in communication with its associated pressure-generating chamber. With regard to the valve means, it is preferred to employ one valve per piston, preferably a check valve. In one preferred arrangement, the check valve is located at an end of its fluid transfer port remote from its pressure chamber, and with this arrangement a pressure delivery port, preferably extending radially from its fluid transfer port intersects the latter in the vicinity of the check valve. Supply of low pressure fluid may be effected by a delivery port, connected to a source of supply of low pressure fluid, and in communication with the check valve. In another embodiment of valve means, the valve member is spring loaded into a seating position and has a frusto-conical nose, to engage a corresponding valve seat, provided with a sealing ring. In another embodiment of valve means, it is arranged for the low pressure or pre-charged fluid to open the associated check valve automatically at the radially innermost position of the or each piston, simultaneously closing a high pressure outlet or delivery port, the check valve closing, when the pressure cycle begins i.e. when radially outward movement of the or each piston commences, and the outlet or delivery port simultaneously being opened. Preferably, each check valve takes the form of a valve member slidable within a valve body. Conveniently, the valve member incorporates a smaller diameter face, adapted to be in communication with the lower, pre-charge pressure, and a larger diameter face adapted to be in communication with the higher, delivery pressure. In detail, the valve member may comprise a central bore, for transmission of low pressure fluid from a supply source to its pressure chamber. At the radially innermost position, pressure at the charge pressure on the smaller face displaces the valve member to allow flow of fluid at pre-charge pressure, and simultaneously to close an associated delivery port, with the valve member automatically being displaced, commencing at the radially outermost position, when pressure build up occurs in the pressure chamber above the pre-delivery pressure, such displacement closing off the inlet port and eventually exposing a delivery conduit for delivery of higher pressure fluid from the pressure chamber to the required delivery point.

Preferably, conventional oil seals are provided at the outsides of the first and second bearings between rotary and non-rotary parts of the gearbox, which oil seals, together with the fluid seals between the external periphery of the or each of the pistons and the cylinder in which the pistons is/are reciprocable, maintain separation between the fluid (e.g., water) within the pressure generating chambers, and the oil of the gearbox.

The cutting head may be of a kind intended for mineral winning purposes e.g. for mounting on the ranging arm of a shearer type mining machine, or alternatively may be of a kind intended for rock cutting purposes e.g. for mounting on a boom or other moveable element of a roadheader type machine for driving underground roadways, headings or tunnels. Thus, the cutting head may be provided with a plurality of replaceable cutter picks and furthermore,in the case of mineral winning, the head may be provided with one or more spiral vanes, on which at least some of the picks are mounted, for enhanced mineral loading onto an associated conveyor.

In accordance with a further proposal of the second aspect of the invention, the rotary cutting head is provided with a hollow drive shaft, with at least one nozzle intended in use to direct a water spray along the hollow shaft to induce an air flow, and with two concentric tubes extending axially along the hollow shaft to convey water, at two different pressures to the rotary cutting head, a first pressure being for low pressure supply to the piston(s) of the carrier and the second pressure being a higher pressure supply to be conveyed to spray nozzles in the vicinity of the cutter picks. With this embodiment, the pressure delivery port of the or each pressure chamber serves to introduce the pressure fluid to a conduit system for conveyance to the vicinity of the cutter picks, for water jet assisted cutting of the mineral involved. In detail, the conduit system may incorporate an adaptor into which is fitted one end of a lance of length to convey the high pressure water supply to the vicinity of the cutter picks and in particular to a spray nozzle at the terminal end of the lance as described in EP—A—163432. For safety purposes, a pressure relief bore may be in communication with the adaptor, the relief bore terminating in a burstable disc.

By way of example, a cutting head in accordance with the second aspect of the invention incorporating a gearbox in accordance with the first aspect of the invention, will now be described in greater detail with reference to the accompanying drawings, in which:—

Figure 1 is an axial sectional view through a first embodiment of cutting head and gearbox in accordance with the invention;

Figure 2 is a transverse sectional view through a portion of Figure 1;

Figure 3 corresponds to Figure 1 but shows a second embodiment; and

Figure 4 is a transverse sectional view through the embodiment of Figure 3.

In both embodiments, like components are accorded like reference numerals.

A rotary, mineral winning, cutting head 1, comprises an outer barrel part 2 around which is welded at least one helical vane 3 carrying, in the well known manner, a plurality of pick boxes (not shown) each to retain releasably a mineral cutter pick (not shown). Around one end of the barrel part 2 is also welded an end plate 4, likewise provided with pick boxes and picks. The barrel part 2 is attached to a first, inner collar 5 which is seated on, and secured by bolts 6 to, a second collar 7 drivably mounted by splines 8 on a hollow drive shaft 9 rotatable about longitudinal axis 10. Within the barrel part 2, and on the drive shaft 9, is mounted part of an epicyclic gearbox 11. The drive shaft 9 is rotatably supported against a gearbox casing 12 by a pair of interposed, and spaced apart, roller bearings 13, the casing 12 and hence the gearbox 11 being carried at one end 14 of a ranging arm 15 pivotally attached at its other end, in the well known manner, to a shearer type mining machine (not shown). The arm 15 is hollow and carries a gear train drivably connected to an electric motor (not shown) and terminating in a drive pinion 16 in mesh with a first gear ring 17 of a sun gear 18 which is mounted for rotation about the axis 10 on a double roller bearing 19 carried by the gearbox 11, whilst a second gear ring 20 is in drivable engagement with a plurality of planet wheels 21 carried by a carrier 22 which is constituted by a portion of the drive shaft 9, the planet wheels 21 being in mesh with a stationary annulus 23 carried by the casing 12.

The carrier 22 is provided with nine radially extending cylinders 24, located in a common diametral plane, and spaced 40° apart around the axis 10. Each cylinder 24 has an open, outer end 25 and a closed, inner end 26, and each cylinder 24 partially houses a reciprocable piston 27, with a variable volume pressure-generating chamber 28 defined between a radially inner end 29 of the piston 27 and the closed, inner end 26 of its cylinder.

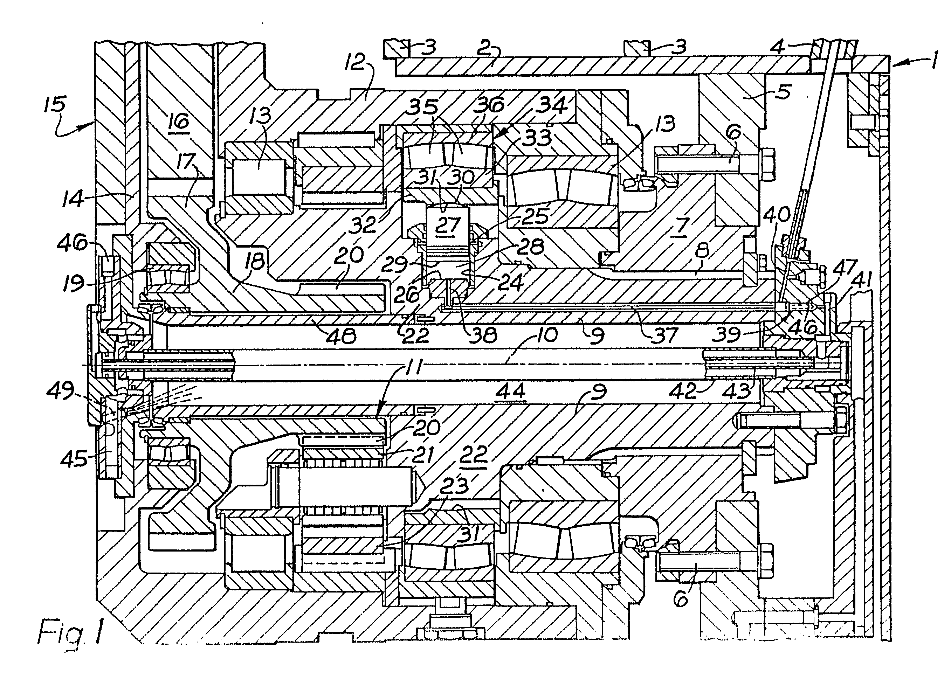

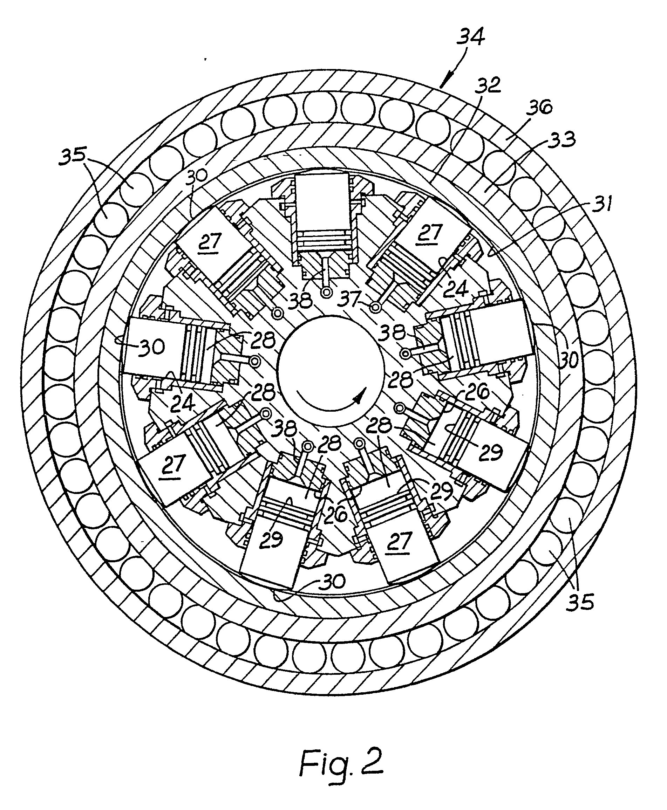

In the embodiment of Figures 1 and 2, radially outer ends 30 of the pistons 27 are (when the chambers 28 are provided with pressure fluid) in direct engagement with an inner annular face 31 (constituting the inner profile) of a liner ring 32 of an inner race part 33 of a bearing ring 34, with double roller bearings 35 interposed between the inner race part 33 and an outer race part 36, the bearing ring 34 being located eccentrically with respect to the axis 10, so that one revolution of the drive shaft 9 produces one delivery stroke of the or each piston 27.

A fluid transfer port 37 is in fluid flow communication with each pressure-generating chamber 28, each port 37 extending axially along the drive shaft 9. One end of each transfer port 27 terminates at a radial connection port 38 in communication with its associated pressure-generating chamber 28, while the other end of each transfer port 37 is in fluid flow communication with a valve means 39 to control fluid admission to, and delivery from, the associated pressure-generating chamber 28. A pressure delivery port 40 intersects each transfer port 37 in the vicinity of the valve means 39, which is conveniently a check valve, while supply of low pressure fluid to the valve means 39 is effected by a delivery port 41 connected to an inner one of two concentric tubes 42, 43, of different diameters extending along hollow interior 44 of the drive shaft 9. Each tube 42, 43 is connected to a respective supply conduit 45, 46, in turn connected to a pump (not shown). Each check valve of each valve means 39 takes the form of a spring loaded valve member 46 slidable within a valve body 47.

The hollow interior 44 of the drive shaft 9 is extended by a tube 48 passing through the sun gear 18, to define a hollow shaft, in which is located a water spray nozzle 49 to direct a water spray along the hollow shaft for so-called hollow-shaft ventilation.

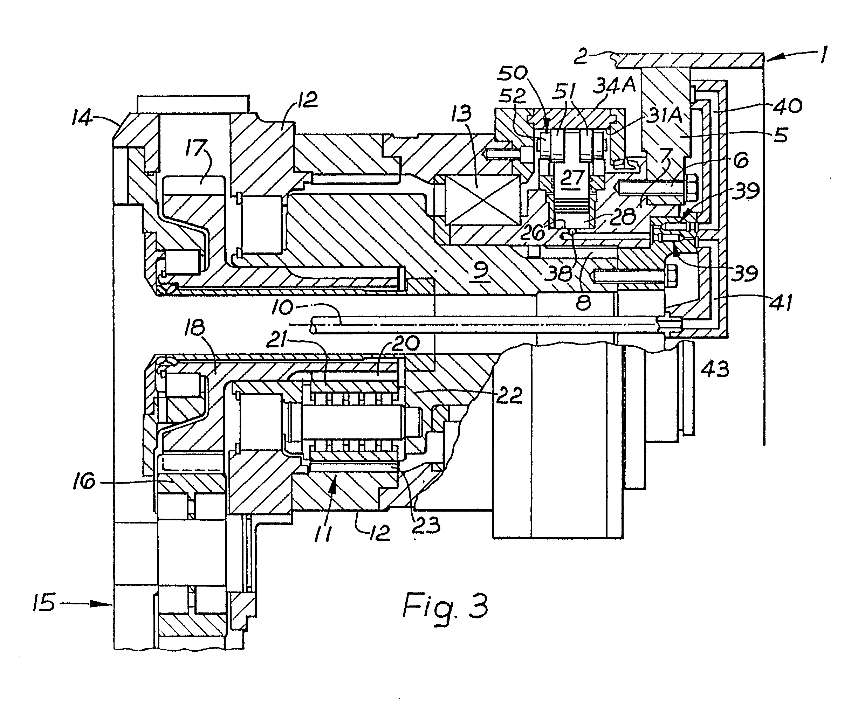

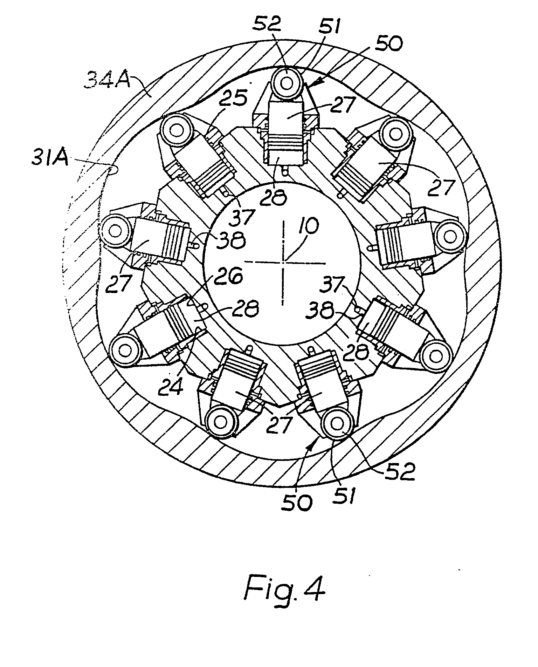

In the embodiment of Figures 3 and 4 a ring 34A has a lobed inner face 31A, so that multiple reciprocation of pistons 27 is effected during one revolution of the drive shaft 9. Each piston 27 engages the ring 34A indirectly via a follower arrangement 50 comprising a first pair of spaced apart rollers 51 to engage the lobed inner face or profile 31A, and a second pair of spaced apart rollers 52 to engage guide surfaces of a pair of arms projecting from each follower arrangement 50. It will be observed that in the embodiment of Figures 3 and 4, in contrast to that of Figures 1 and 2, the pump arrangement is located remotely from the ranging arm 15. Also in the embodiment of Figures 3 and 4 the (low pressure) delivery port 41 is provided with a first valve means 39 and the (high pressure) delivery port 40 is provided wih a second valve means 39.

## Claims

1. A gearbox for a rotary cutting head of mining machinery comprising:

a casing (12);

speed reduction gearing (18, 11, 20—23) contained in the casing (12);

at least a portion of a drive shaft (9) also contained in the casing, the drive shaft having an axis of rotation (10); and

first and second bearings (13) spaced apart along the axis (10); characterised in that

at least one radially extending cylinder (24) having a closed inner end (26) and an open, outer end (25) is provided in the portion of the drive shaft (9) contained in the casing;

a reciprocable piston (27) is at least partially housed in a cylinder (24) with a fluid seal between the external periphery of the piston (27) and the internal periphery of its cylinder (24);

a variable volume, pressure-generating chamber (28) is defined between a radially inner end (29) of a piston (27) and the closed, inner end (26) of its cylinder (24);

a ring (34) surrounds the drive shaft (9) and an inner profile (31) is provided on the ring (34);

a radially outer end (30) of the piston (27) is in contact, at least in a pumping mode, with the inner profile (31), such that upon rotation of the drive shaft (9), variations in radial distance of the inner profile (31) from the drive shaft axis of rotation (10) causes reciprocation of the piston (27), and a consequent pumping effect;

at least one fluid transfer port (37) communicating with the pressure-generating chamber(s) (28); and

with the first and second bearings (13) additionally absorbing loading from the piston (27) and the ring (34);

valve means (39) to control fluid admission to, and delivery from, each of the pressure-generating chambers (28).

2. A gearbox as claimed in Claim 1, characterised in that the inner profile (31) of the ring (34) is circular, with the ring (34) located eccentrically with respect to the drive shaft axis of rotation (10).

3. A gearbox as claimed in Claim 2, characterised in that the ring (34) is in the form of a bearing ring, with the inner profile (31) provided by an inner annular face of an inner race part (33) which is separated from an outer race part (36) by a plurality of rollers (35), and the outer race part (36) is located stationarily with respect to the drive shaft (9).

4. A gearbox as claimed in Claim 1, characterised in that the ring (34A) is located concentrically with respect to the drive shaft axis of rotation (10), with the inner profile (31A) lobed, to constitute a cam track, the ring 34A being located stationarily with respect to the drive shaft (9).

5. A gearbox as claimed in Claim 4, characterised in that an outer end of the piston(s) (27) is provided with a roller follower arrangement (50), for indirect engagement with the profile (31A).

6. A gearbox as claimed in any one of Claims 1 to 5, characterised in that the drive shaft (9) is provided with a multiple number of cylinders (24) and pistons (27), located in a common diametral plane.

7. A gearbox as claimed in any one of Claims 1 to 6, characterised in that the fluid transfer port(s) (37) serves for both the conveying of low pressure fluid to its associated pressure-generating chamber (28), and the delivery of high pressure fluid from its associated pressure-generating chamber (28).

8. A gearbox as claimed in Claim 7, characterised in that the fluid transfer port(s) (37) extends axially along the drive shaft (9) and terminates at one end at a radial connection port (38) in communication with its associated pressure-generating chamber (28).

9. A gearbox as claimed in any one of Claims 1 to 8, characterised in that the valve means (39) is a check valve, and one valve means (39) per transfer port (37) is employed.

10. A gearbox as claimed in any one of Claims 1 to 9, characterised in that conventional oil seals are provided at the outsides of the first and second bearings (13) between rotary and non-rotary parts of the gearbox/gearing (18, 11, 20—23), which oil seals, together with the fluid seals between the external periphery of the or each of the pistons (27) and the cylinder (24) in which the pistons (27) is/are reciprocable, serving to maintain separation between the fluid e.g. water, within the pressure generating chamber (28) and the oil of the gearbox.

## Patentansprüche

1. Getriebe für einen Schrämkopf einer Bergbaumaschine, bestehend aus einem Getriebekastan, einem Untersetzungs-Räderwerk im Getriebekasten, einem ebenfalls im Getriebekasten befindlichen Teil einer Antriebswelle mit einer Drehachse und längs der Drehachse im Abstand voneinander angeordneten ersten und zweiten Lagern, dadurch gekennzeichnet, daß in dem im Getriebekasten (12) befindlichen Teil der Antriebswelle (9) wenigstens ein Radialzylinder (24) mit einem geschlossenen inneren Ende (26) und einem offenen Außenende (25) vorgesehen ist, daß in dem Zylinder (24) ein hin und herführbarer Kolben (27) mit einer Flüssigkeitsdichtung zwischen seiner Außenwand und der Zylinderinnenwand zumindest teilweise untergebracht ist, daß von dem radial innenliegenden Ende (29) des Kolbens und dem geschlossenen Innenende (26) seines Zylinders eine Druckerzeugungskammer (28) mit veränderbarem Volumen begrenzt wird, ein Ring (34) die Antriebswelle umgibt und dieser Ring mit einem Innenprofil (31) versehen ist, daß ein radial außenliegendes Kolbenende (30) zumindest beim Pumpen, mit dem Innenprofil (31) in Kontakt steht, sodaß bei Verdrehung der Antriebswelle Veränderungen im Radialabstand des Innenprofils von der Drehachse (10) der Antriebswelle ein Hin- und Hergehen des Kolbens und damit eine Pumpwirkung verursachen, daß ferner wenigstens ein Überströmkanal (37) mit der oder den Druckerzeugungskammer(n) in Verbindung steht, wobei das erste und das zweite Lager (13) zusätzlich eine Belastung vom Kolben und vom Ring absorbieren und daß zur Steuerung des Flüssigkeitszuflusses zu sowie des Abflusses von den Druckerzeugungskammern Ventile (39) vorgesehen sind.

2. Getriebe nach Anspruch 1, dadurch gekennzeichnet, daß das Innenprofil (31) des Ringes (34) kreisrund ist und der Ring in Bezug auf die Drehachse (10) der Antriebswelle (9) exzentrisch angeordnet ist.

3. Getriebe nach Anspruch 2, dadurch gekennzeichnet, daß der Ring (34) die Form eines Lagerringes hat, bei welchem das Innenprofil (31) durch eine kreisringförmige Innenfläche des inneren Laufringes (33) gebildet wird und zwischen diesem inneren Laufring und dem gegenüber der Antriebswelle (9) feststehenden äußeren Laufring (36) eine Vielzahl von Rollen (35) angeordnet sind.

4. Getriebe nach Anspruch 1, dadurch gekennzeichnet, daß der Ring (34A) konzentrisch zur Drehachse (10) der Antriebswelle liegt, daß sein Innenprofil (31A) mehrbogig ausgebildet ist und dadurch eine Kurvenbahn bildet und daß der Ring gegenüber der Antriebswelle (9) festliegt.

5. Getriebe nach Anspruch 4, dadurch gekennzeichnet, daß das Außenende des bzw. eines jeden Kolbens (27) eine Kurvenrollen-Einrichtung (50) trägt und über diese indirekt mit dem Innenprofil (31A) in Eingriff steht.

6. Getriebe nach irgendeinem der Ansprüche 1 bis 5, dadurch gekennzeichnet, daß die Antriebswelle (9) mit einer Vielzahl von in einer gemeinsamen Diametralebene liegenden Radialzylinder (24) und Kolben (27) versehen ist.

7. Getriebe nach irgendeinem der Ansprüche 1 bis 6, dadurch gekennzeichnet, daß der Überströmkanal (37) bzw. jeder von ihnen sowohl zur Speisung seiner zugeordneten Druckerzeugerkammer (28) mit Niederdruckflüssigkeit wie zur Abgabe von Hochdruckflüssigkeit aus dieser Kammer dient.

8. Getriebe nach Anspruch 7, dadurch gekennzeichnet, daß der Überströmkanal (37) bzw. jeder von ihnen axial längs der Antriebswelle (9) verläuft und am einen Ende in einen zur zugeordneten Druckerzeugerkammer (28) führenden Verbindungskanal (38) übergeht.

9. Getriebe nach irgendeinem der Ansprüche 1 bis 8, dadurch gekennzeichnet, daß das Ventil (39) ein Rückschlagventil ist und für jeden Überströmkanal (37) ein derartiges Ventil vorgesehen ist.

10. Getriebe nach irgendeinem der Ansprüche 1 bis 9, dadurch gekennzeichnet, daß an den Außenseiten des ersten und des zweiten Lagers (13) zwischen den sich drehenden und den feststehenden Teilen des Getriebesgehäuses/Rädergetriebe (18, 11, 20—23) herkömmliche Öldichtungen vorgesehen sind, welche zusammen mit den Flüssigkeitsdichtungen zwischen der Außenwand des bzw. eines jeden Kolbens (27) und der Innenwand des bzw. eines jeden Zylinders (24), in welchem die Kolben hin und her gleiten, dazu dienen, eine Trennung zwischen der Flüssigkeit, wie z.B. Wasser, in der bzw. einer jeden Druckerzeugerkammer (28) und dem Öl im Getriebegehäuse sicherzustellen.

## Revendications

1. Carter d'engrenages pour une tête de havage rotative d'une machine minière, comprenant:
un carter (12);
un ensemble d'engrenages réducteur de vitesse (18, 11, 20—23) contenu dans le carter (12);
au moins une partie d'un arbre d'entraînement (9) également contenue dans le carter, l'arbre d'entraînement présentant un axe de rotation (10); et
des premier et deuxième paliers (13) distants l'un de l'autre dans la direction de l'axe (10);
caractérisé en ce que
au moins un cylindre s'étendant radialement (24), présentant une extrémité intérieure fermée (26) et une extrémité extérieure ouverte (25), est prévu dans la partie de l'arbre d'entraînement (9) contenue dans le carter;
un piston mobile en va-et-vient (27) est au moins partiellement logé dans un cylindre (24) avec un joint d'étanchéité aux fluides entre la périphérie externe du piston (27) et la périphérie interne de son cylindre (24);
une chambre génératrice de pression à volume variable (28) est définie entre une extrémité radialement intérieure (29) d'un piston (27) et l'extrémité intérieure fermée (26) de son cylindre (24);

une bague (34) entoure l'arbre d'entraînement (9) et un profil intérieur (31) est prévu sur la bague (34);

une extrémité radialement extérieure (30) du piston (27) est en contact, au moins dans un mode de pompage, avec le profil intérieur (31), de sorte que lors de la rotation de l'arbre d'entraînement (9), les variations de la distance radiale entre le profil intérieur (31) et l'axe de rotation (10) de l'arbre d'entraînement engendrent le déplacement en va-et-vient du piston (27), et par suite un effet de pompage;

au moins une lumière de transfert de fluide (37) communiquant avec la ou les chambres génératrices de pression (28); et

avec les premier et deuxième paliers (13) absorbant en complément la charge provenant du piston (27) et de la bague (34);

des valves (39) pour commander l'admission de fluide à chacune des chambres génératrices de pression (28), et la délivrance de fluide à partir desdites chambres.

2. Carter d'engrenages selon la revendication 1, caractérisé en ce que le profil intérieur (31) de la bague (34) est circulaire, la bague (34) étant disposée excentriquement par rapport à l'axe de rotation (10) de l'arbre d'entraînement.

3. Carter d'engrenages selon la revendication 2, caractérisé en ce que bague (34) se présente sous la forme d'une bague de roulement, le profil intérieur (31) étant fourni par une face annulaire intérieure d'un chemin de roulement intérieur (33) qui est séparé d'un chemin de roulement extérieur (36) par une pluralité de rouleaux (35), et le chemin de roulement extérieur (36) étant disposé fixe par rapport à l'arbre d'entraînement (9).

4. Carter d'engrenages selon la revendication 1, caractérisé en ce que la bague (34A) est disposée concentriquement à l'axe de rotation (10) de l'arbre d'entraînement, le profil intérieur (31A) étant lobé pour constituer une piste de came, la bague (34A) étant disposée fixe par rapport à l'arbre d'entraînement (9).

5. Carter d'engrenages selon la revendication 4, caractérisé en ce qu'une extrémité extérieure du ou des pistons (27) est munie d'un ensemble suiveur de came à galets (50), pour coopérer indirectement avec le profil (31A).

6. Carter d'engrenages selon l'une quelconque des revendications 1 à 5, caractérisé en ce que l'arbre d'entraînement (9) est muni d'une multiplicité de cylindres (24) et de pistons (27), situés dans un plan diamétral commun.

7. Carter d'engrenages selon l'une quelconque des revendications 1 à 6, caractérisé en ce que la ou les lumières de transfert de fluide (37) servent à la fois à véhiculer du fluide sous basse pression vers la chambre génératrice de pression (28) associée à chaque lumière, et à délivrer du fluide sous haute pression provenant de la chambre génératrice de pression (28) associée.

8. Carter d'engrenages selon la revendication 7, caractérisé en ce que la ou les lumières de transfert de fluide (37) s'étendent axialement le long de l'arbre d'entraînement (9) et se terminent à une extrémité par une lumière de raccordement radiale (38) qui communique avec la chambre génératrice de pression (28) associée à chaque lumière (37).

9. Carter d'engrenages selon l'une quelconque des revendications 1 à 8, caractérisé en ce que la valve (39) est un clapet antiretour, et avec utilisation d'une valve (39) par lumière de transfert (37).

10. Carter d'engrenages selon l'une quelconque des revendications 1 à 9, caractérisé en ce que des joints d'étanchéité à l'huile conventionnels sont prévus sur les côtés extérieurs des premier et deuxième paliers (13) entre les parties rotatives et les parties non rotatives de l'ensemble d'engrenages (18, 11, 20—23), lesquels joints d'étanchéité à l'huile, conjointement avec les joints d'étanchéité aux fluides prévus entre la périphérie externe du ou de chacun des pistons (27) et le cylindre (24) dans lequel le ou les pistons (27) sont mobiles en va-et-vient, servent à assurer la séparation entre le fluide, tel que de l'eau, qui se trouve à l'intérieur de la chambre génératrice de pression (28) et l'huile du carter d'engrenages.

Fig. 1

Fig. 2

Fig. 3

0 167 397

Fig. 4